# EUROPEAN PATENT SPECIFICATION

(11) **EP 2 991 280 B1**
(45) Date of publication and mention of the grant of the patent: **28.11.2018**
(21) Application number: 13887887.1
(22) Date of filing: 29.06.2013
(51) Int. Cl.: H04L 29/12, H04L 29/08, H04L 12/58

(54) **CONTENT SHARING METHOD AND SOCIAL SYNCHRONIZING APPARATUS**
VERFAHREN ZUM GEMEINSAMEN NUTZEN VON INHALTEN UND SOZIALE SYNCHRONISIERUNGSVORRICHTUNG
PROCÉDÉ DE PARTAGE DE CONTENU ET APPAREIL DE SYNCHRONISATION SOCIALE

(43) Date of publication of application: 02.03.2016
(73) Proprietor: Huawei Technologies Co., Ltd., Longgang District Shenzhen, Guangdong 518129 (CN)
(72) Inventor: LU, Jianfeng, Shenzhen Guangdong 518129 (CN); MA, Hanjun, Shenzhen Guangdong 518129 (CN); YANG, Xiangyu, Shenzhen Guangdong 518129 (CN)
(74) Representative: Körber, Martin Hans
(86) International application number: PCT/CN2013/078505
(87) International publication number: WO 2014/205842

(56) References cited:
- CN-A- 103 001 856
- CN-A- 103 078 881
- CN-A- 103 139 046
- US-A1- 2008 147 482
- US-A1- 2008 244 414
- US-A1- 2011 313 832

## Description

### TECHNICAL FIELD

The present invention relates to content sharing technologies, and specifically, to a content sharing method and a social synchronization apparatus.

### BACKGROUND

Currently, in order to vitalize and promote provided content, communication circles may be established on some OTT (over the top, OTT) content servers for the provided content, and popularity of the content is increased as members in the communication circles communicate with each other about the content, where the content may be: social TV (social TV), an online book, an online game, online music, video content, and the like. However, because a quantity of persons and a vitality degree of the communication circles established on the content servers are restricted by users of the content servers, there may be seriously insufficient users, which leads to a low popularity of the content; whereas some third-party social networking sites (Social Network Site, SNS) are very popular, and it is desirable that the OTT content of the OTT content servers be promoted by virtue of popularity of the third-party SNSs. Therefore, the OTT content servers further need to provide a capability of sharing the OTT content on the third-party SNSs.

For example, after opening a video on a video website, a user may choose to share the video on a third-party SNS, and a new microblog or a new post published by the user may appear on the third-party SNS, where content of the microblog or the post includes a link address of the shared video. In this way, a follower or a friend of the user on the third-party SNS may see the link shared in the microblog or the post, watch content of the video by clicking the link, and may further perform an operation such as commenting on or forwarding the microblog or the post.

However, same content of a content server that is shared on the third-party SNS by different users is not associated, so that attention to the content on the third-party SNS cannot be accurately reflected.

US Patent Application NO. 2008/0147482 discloses a method for processing the selection and propagation of advertisements in a social network. In various embodiments, direct or indirect specification of an advertisement to be displayed on a web page or other medium being published or administered by a user is received by a computing device. In response, the computing device provides or enables provision of the advertisement to be delivered and displayed to another user that is a friend of the user, and/or another advertisement to be displayed subsequently to the user. In various embodiments, the computing device provides or enables provision of an advertisement to be displayed for the user based on the intersection of the preferences of the user with the preferences of a publisher or administrator of content being consumed by the user. In various embodiments, the computing device tracks propagation of an advertisement through a social network of users, and/or determining the nature and amount of influence a user has in propagating an advertisement through the social network.

US Patent Application NO. 2011/313832 discloses a method for pricing in social advertising. Online recommendations are tracked through a forwarding service. The forwarding service can provide such statistics to an ad service, which can provide incentives to the recommending user and a consuming user. Example incentives may include an accumulation of points by the recommending user, a discount to the consuming user if a purchase is made in response to the recommendation, etc. To determine how much of an incentive each participant in the recommendation flow receives, a graph is created to model the recommendation flow and incentives are allocated using a cooperative game description based on this graph that associates each participant with a power index that represents that participants share of the incentive.

### SUMMARY

Embodiments of the present invention provide a content sharing method and a social synchronization apparatus, which can solve a problem that same content of a content server that is shared by different users on a third-party SNS is not associated, so that attention to the content on the third-party SNS can be accurately reflected.

According to a first aspect, an embodiment of the present invention provides a content sharing method, including:
receiving, by a social synchronization apparatus, a first content, sharing request sent by a content server, where the first content sharing request includes an internal identifier of content that a user requests to share and an identifier of a destination website, where the internal identifier of the content is an identifier of the content on the content server; acquiring, by the social synchronization apparatus, an identifier of the user on the destination website; querying, by the social synchronization apparatus, a stored first correspondence among the internal identifier of the content, the identifier of the destination website, and an external identifier of the content according to the internal identifier of the content and the identifier of the destination website, to acquire the external identifier of the content on the destination website, where the external identifier of the content is an identifier generated by the destination website for the content when the content is shared by using the content server for the first time on the destination website; and sending, by the social synchronization apparatus, a second content sharing request to the destination website according to the identifier of the destination website and the identifier of the user on the destination website, where the second content sharing request carries the external identifier of the content and the identifier of the user on the destination website, so as to share the content on a home page of the user on the destination website.

The method further includes: when no external identifier corresponding to the content on the destination website is acquired by querying the stored first correspondence according to the internal identifier of the content and the identifier of the destination website, sending a content publishing request to the destination website according to the identifier of the destination website and the identifier of the user on the destination website, where the content publishing request carries the internal identifier of the content and the identifier of the user on the destination website, so as to publish the content on the home page of the user on the destination website; receiving a content publishing response returned by the destination website, where the content publishing response includes an external identifier of the content; and storing a first correspondence among the internal identifier of the content, the identifier of the destination website, and the external identifier of the content.

With reference to the first aspect, in a first possible implementation manner of the first aspect, the method further includes: receiving a first comment sharing request, sent by the content server, to comment on the content, where the first comment sharing request includes the internal identifier of the content, an internal identifier of a comment, the identifier of the destination website, and the comment, where the internal identifier of the comment is an identifier of the comment on the content server; acquiring, according to the internal identifier of the content, the identifier of the destination website, and the stored first correspondence, the external identifier of the content that is on the destination website and corresponding to the internal identifier of the content; sending a second comment sharing request to comment on the content to the destination website according to the external identifier of the content and the identifier of the destination website, where the second comment sharing request includes the comment and the external identifier of the content, so as to publish the comment to the content on the destination website; receiving a comment sharing response sent by the destination website, where the comment sharing response includes an external identifier of the comment and the external identifier of the content, where the external identifier of the comment is generated when the comment is published to the content on the destination website; and storing a second correspondence among the internal identifier of the content, the internal identifier of the comment, and the external identifier of the comment.

With reference to the first possible implementation manner of the first aspect, in a second possible implementation manner of the first aspect, the method further includes: sending a comment acquisition request to the destination website, where the comment acquisition request includes the external identifier of the content; and receiving a comment acquisition response returned by the destination website, where the comment acquisition response includes a third correspondence between the comment on the content and the external identifier of the comment.

With reference to the second possible implementation manner of the first aspect, in a third possible implementation manner of the first aspect, the method further includes: acquiring external identifiers of all comments on the content from the second correspondence according to the second correspondence and the internal identifier of the content; searching the second correspondence and the third correspondence for a duplicate external identifier of a comment, and deleting, from the third correspondence, the comment corresponding to the duplicate external identifier of the comment; and sending a remaining comment in the third correspondence after the deletion to the content server according to the internal identifier of the content, so that the content server publishes the remaining comment to the content.

With reference to the first aspect or any of the first to the third possible implementation manners of the first aspect, in a fourth possible implementation manner of the first aspect, the method further includes: when the first content sharing request further includes an account of the user on the content server, the acquiring an identifier of the user on the destination website is specifically: acquiring the identifier of the user on the destination website according to the account of the user on the content server, the identifier of the destination website, and a stored fourth correspondence between the account of the user on the content server and the identifier of the user on the destination website; or when the first content sharing request further includes an account of the user on the content server, the acquiring an identifier of the user on the destination website is specifically: acquiring, from a fourth correspondence stored on the content server, the identifier of the user on the destination website according to the account of the user on the content server and the identifier of the destination website; or when the first content sharing request further includes the identifier of the user on the destination website, the acquiring an identifier of the user on the destination website is specifically: acquiring the identifier of the user on the destination website from the first content sharing request.

According to a second aspect, the present invention provides a social synchronization apparatus, including: a first receiving unit, configured to receive a first content sharing request sent by a content server, where the first content sharing request includes an internal identifier of content that a user requests to share and an identifier of a destination website, where the internal identifier of the content is an identifier of the content on the content server; a first acquiring unit, configured to acquire an identifier of the user on the destination website; a second acquiring unit, configured to acquire the internal identifier of the content and the identifier of the destination website from the first receiving unit, and query a stored first correspondence among the internal identifier of the content, the identifier of the destination website, and an external identifier of the content according to the internal identifier of the content and the identifier of the destination website, to acquire the external identifier of the content on the destination website, where the external identifier of the content is an identifier generated by the destination website for the content when the content is shared by using the content server for the first time on the destination website; and a first sending unit, configured to receive the external identifier that is acquired by the second acquiring unit and that is corresponding to the content on the destination website, and send a second content sharing request to the destination website according to the identifier of the destination website and the identifier of the user on the destination website, where the second content sharing request carries the external identifier of the content and the identifier of the user on the destination website, so as to share the content on a home page of the user on the destination website.

The social synchronization apparatus further includes: a publishing unit, configured to: when no external identifier corresponding to the content on the destination website is acquired by querying the stored first correspondence according to the internal identifier of the content and the identifier of the destination website, send a content publishing request to the destination website according to the identifier of the destination website and the identifier of the user on the destination website, where the content publishing request carries the internal identifier of the content and the identifier of the user on the destination website, so as to publish the content on the home page of the user on the destination website; a second receiving unit, configured to receive a content publishing response returned by the destination website, where the content publishing response includes an external identifier of the content; and a first storage unit, configured to receive the external identifier of the content that is sent by the second receiving unit, and store a first correspondence among the internal identifier of the content, the identifier of the destination website, and the external identifier of the content.

With reference to the second aspect, in a first possible implementation manner of the second aspect, the social synchronization apparatus further includes: a third receiving unit, configured to receive a first comment sharing request, sent by the content server, to comment on the content, where the first comment sharing request includes the internal identifier of the content, an internal identifier of a comment, the identifier of the destination website, and the comment, where the internal identifier of the comment is an identifier of the comment on the content server; a third acquiring unit, configured to receive the internal identifier of the content and the identifier of the destination website that are sent by the third receiving unit, and acquire, according to the internal identifier of the content, the identifier of the destination website, and the stored first correspondence, the external identifier of the content that is on the destination website and corresponding to the internal identifier of the content; a second sending unit, configured to receive the external identifier of the content that is sent by the third acquiring unit, and send a second comment sharing request to comment on the content to the destination website according to the external identifier of the content and the identifier of the destination website, where the second comment sharing request includes the comment and the external identifier of the content, so as to publish the comment to the content on the destination website; a fourth receiving unit, configured to receive a comment sharing response sent by the destination website, where the comment sharing response includes an external identifier of the comment and the external identifier of the content, where the external identifier of the comment is generated when the comment is published to the content on the destination website; and a second storage unit, configured to receive the external identifier of the comment and the external identifier of the content that are sent by the fourth receiving unit, and store a second correspondence among the internal identifier of the content, the internal identifier of the comment, and the external identifier of the comment.

With reference to the first possible implementation manner of the second aspect, in a second possible implementation manner of the second aspect, the social synchronization apparatus further includes: a third sending unit, configured to send a comment acquisition request to the destination website, where the comment acquisition request includes the external identifier of the content; and a fifth receiving unit, configured to receive a comment acquisition response returned by the destination website, where the comment acquisition response includes a third correspondence between the comment on the content and the external identifier of the comment.

With reference to the second possible implementation manner of the second aspect, in a third possible implementation manner of the second aspect, the social synchronization apparatus further includes: a fourth acquiring unit, configured to acquire external identifiers of all comments on the content from the second correspondence according to the second correspondence and the internal identifier of the content; a deduplication unit, configured to delete, from the third correspondence, a comment with a duplicate external identifier of the comment in the second correspondence and the external identifier of the comment according to an external identifier of each comment on the content in the third correspondence and the external identifiers of all the comments on the same content in the second correspondence; and a fourth sending unit, configured to send a comment in the third correspondence after the deletion to the content server according to the internal identifier of the content, so that the content server publishes the comment to the content.

With reference to the second aspect, in a fourth possible implementation manner of the second aspect, the first acquiring unit is specifically configured to: when the first content sharing request further includes an account of the user on the content server, acquire the identifier of the user on the destination website according to the account of the user on the content server, the identifier of the destination website, and a stored fourth correspondence between the account of the user on the content server and the identifier of the user on the destination website; or when the first content sharing request further includes an account of the user on the content server, acquire, from a fourth correspondence stored on the content server, the identifier of the user on the destination website according to the account of the user on the content server and the identifier of the destination website; or when the first content sharing request further includes the identifier of the user on the destination website, acquire the identifier of the user on the destination website from the first content sharing request.

It can be seen from the foregoing technical solutions provided in the embodiments of the present invention that a first correspondence is stored in a social synchronization apparatus; when receiving a first content sharing request, the social synchronization apparatus first queries the stored first correspondence according to the first correspondence and an internal identifier of content, to acquire an external identifier of content on a destination website, and then sends a second content sharing request including the external identifier of the content to the destination website. In this way, the content can be shared on the destination website. Further, because the second content sharing request includes the external identifier of the existing content, the destination website can send the existing content on a home page of a user according to the external identifier of the existing content. In this way, when same content is shared on a same destination website by different users, the content is associated, so that attention to the content on the destination website can be accurately reflected.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a content sharing method according to an embodiment of the present invention;
FIG. 2 is a flowchart of a content sharing method according to another embodiment of the present invention;
FIG. 3 is a schematic structural diagram of a social synchronization apparatus according to an embodiment of the present invention;
FIG. 4 is a schematic structural diagram of a social synchronization apparatus according to another embodiment of the present invention; and
FIG. 5 is a schematic structural diagram of a social synchronization apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

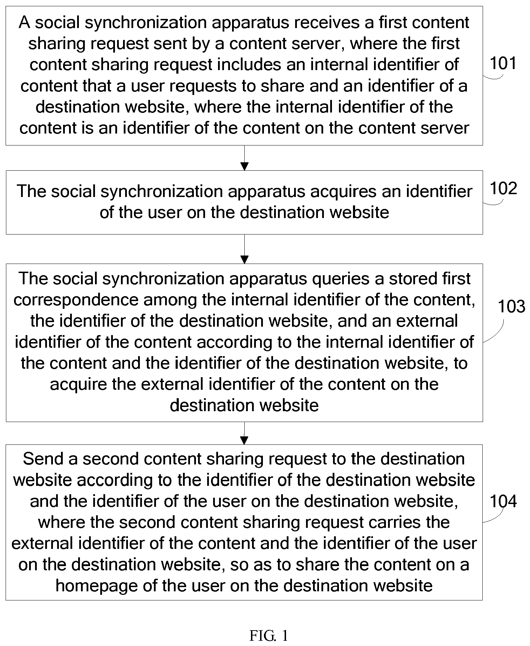

FIG. 1 illustrates a content sharing method provided in the present invention includes:
101: A social synchronization apparatus receives a first content sharing request sent by a content server, where the first content sharing request includes an internal identifier of content that a user requests to share and an identifier of a destination website, where the internal identifier of the content is an identifier of the content on the content server.

Herein, the internal identifier of the content may be a link address of the content on the content server, or may be a code name of the content on the content server, and a link address of the content on the content server may be acquired by using the code name.

102: The social synchronization apparatus acquires an identifier of the user on the destination website.

When the first content sharing request further includes an account of the user on the content server, and a fourth correspondence between the account of the user on the content server and the identifier of the user on the destination website is stored in the social synchronization apparatus, that the social synchronization apparatus acquires an identifier of the user on the destination website is specifically: acquiring the identifier of the user on the destination website according to the account of the user on the content server, the identifier of the destination website, and the stored fourth correspondence; or
when the first content sharing request further includes an account of the user on the content server, and a fourth correspondence is stored on the content server, that the social synchronization apparatus acquires an identifier of the user on the destination website is specifically: acquiring, from the fourth correspondence stored on the content server, the identifier of the user on the destination website according to the account of the user on the content server and the identifier of the destination website; or
when the first content sharing request further includes the identifier of the user on the destination website, that the social synchronization apparatus acquires an identifier of the user on the destination website is specifically: acquiring the identifier of the user on the destination website from the first content sharing request.

103: The social synchronization apparatus queries a stored first correspondence among the internal identifier of the content, the identifier of the destination website, and an external identifier of the content according to the internal identifier of the content and the identifier of the destination website, to acquire the external identifier of the content on the destination website, where the external identifier of the content is an identifier generated by the destination website for the content when the content is shared by using the content server for the first time on the destination website.

104: Send a second content sharing request to the destination website according to the identifier of the destination website and the identifier of the user on the destination website, where the second content sharing request carries the external identifier of the content and the identifier of the user on the destination website, so as to share the content on a home page of the user on the destination website.

It can be seen from the technical solution provided in this embodiment of the present invention that a first correspondence is stored in a social synchronization apparatus; when receiving a first content sharing request, the social synchronization apparatus first queries the stored first correspondence according to the first correspondence and an internal identifier of content, to acquire an external identifier of content on a destination website, and then sends a second content sharing request including the external identifier of the content to the destination website. In this way, the content can be shared on the destination website. Further, because the second content sharing request includes the external identifier of the existing content, the destination website can send the existing content on a home page of a user according to the external identifier of the existing content. In this way, when same content is shared on a same destination website by different users, the content is associated, so that attention to the content on the destination website can be accurately reflected.

When no external identifier corresponding to the content on the destination website is acquired by the social synchronization apparatus by querying the stored first correspondence according to the internal identifier of the content and the identifier of the destination website, that is, the content has not been shared on the destination website yet, the social synchronization apparatus then sends a content publishing request to the destination website according to the identifier of the destination website and the identifier of the user on the destination website, where the content publishing request carries the internal identifier of the content and the identifier of the user on the destination website, so that the user publishes the content on the home page of the user on the destination website; the social synchronization apparatus receives a content publishing response returned by the destination website, where the content publishing response includes an external identifier of the content; and the social synchronization apparatus stores a first correspondence among the internal identifier of the content, the identifier of the destination website, and the external identifier of the content.

The user may further synchronously share a comment on the content on the destination website. In this case, the method further includes: receiving, by the social synchronization apparatus, a first comment sharing request, sent by the content server, to comment on the content, where the first comment sharing request includes the internal identifier of the content, an internal identifier of a comment, the identifier of the destination website, and the comment, where the internal identifier of the comment is an identifier of the comment on the content server; acquiring, according to the internal identifier of the content, the identifier of the destination website, and the stored first correspondence, the external identifier of the content that is on the destination website and corresponding to the internal identifier of the content; sending a second comment sharing request to comment on the content to the destination website according to the external identifier of the content and the identifier of the destination website, where the second comment sharing request includes the comment and the external identifier of the content, so as to publish the comment to the content on the destination website; receiving a comment sharing response sent by the destination website, where the comment sharing response includes an external identifier of the comment and the external identifier of the content, where the external identifier of the comment is generated when the comment is published to the content on the destination website; and storing a second correspondence among the internal identifier of the content, the internal identifier of the comment, and the external identifier of the comment.

After the comment is also shared on the destination website, the social synchronization apparatus may further acquire, from the destination website, all comments on the content on the destination website, and the method further includes: sending, by the social synchronization apparatus, a comment acquisition request to the destination website, where the comment acquisition request includes the external identifier of the content; and receiving a comment acquisition response returned by the destination website, where the comment acquisition response includes a third correspondence between each comment on the content and an external identifier corresponding to each comment.

Because a comment acquired from the destination website and a comment on the content server may be published by a same user, and there is a possibility of duplication, the social synchronization apparatus further needs to delete a duplicate comment acquired from the destination website. In this case, the method further includes: acquiring external identifiers of all comments on the content from the second correspondence according to the second correspondence and the internal identifier of the content; searching the second correspondence and the third correspondence for a duplicate external identifier of a comment, and deleting, from the third correspondence, the comment corresponding to the duplicate external identifier of the comment; and sending a remaining comment in the third correspondence after the deletion to the content server according to the internal identifier of the content, so that the content server publishes the remaining comment to the content.

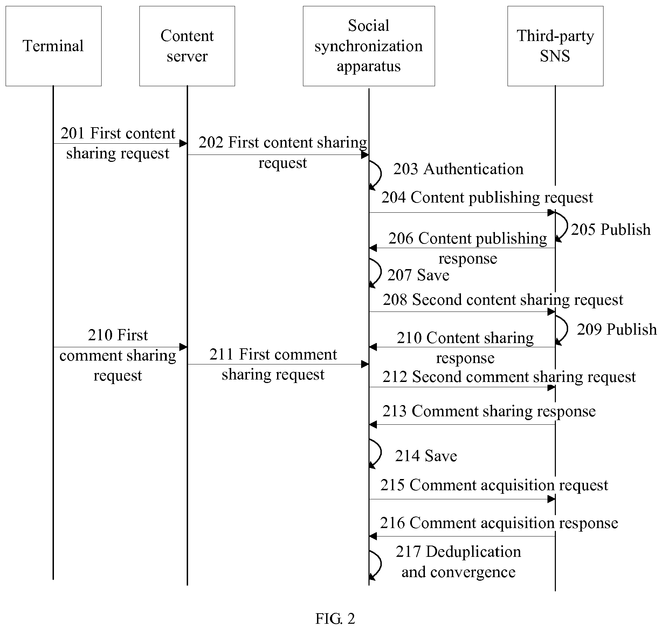

A content sharing method provided in an embodiment of the present invention is introduced first. In this method, a user has accounts on both an OTT content server (hereinafter referred to as a content server) and a third-party SNS (a destination website); the user may publish content by using the account on the content server, and may also share content of the content server on a home page of the user on the third-party SNS by using the account on the third-party SNS. The home page herein includes a form of microblog, such as Sina Weibo. A home page of an SNS is taken as an example in this embodiment, and a microblog or another social network form may also implement the technical solutions of the present invention. The user gives comment permission by using the accounts on the content server and the third-party SNS, and a friend of the user or other people comment on content shared by the user. FIG. 2 illustrates a process of a content sharing method provided in an embodiment of the present invention, including:

201 : When a user uses, by using a terminal, content provided by a content server, and the user needs to share the content on a home page of the user on a third-party SNS, the user sends a first content sharing request to the content server by using the terminal, where the first content sharing request includes an internal ID of the content that needs to be shared and an identifier of the third-party SNS.

In this embodiment of the present invention, the content may be a video, a flash, a song, a game, and the like; the internal ID of the content refers to an ID of the content on the content server, where the ID may be a link address, or may be represented by a code name such as a number, a word, or a letter, where by using the code name, the content server may acquire a link address of the content on the content server or the content on the content server; the identifier of the third-party SNS may be a full name, an abbreviated name, a code name, or the like of the third-party SNS.

202: After receiving the first content sharing request, the content server sends the first content sharing request to a social synchronization apparatus.

203: After receiving the first content sharing request, the social synchronization apparatus acquires an identifier of the user on the third-party SNS.

The identifier of the user on the third-party SNS may be an authentication sequence number generated after an account of the user on the content server and an account of the user on the third-party SNS are bound.

When the first content sharing request further includes the account of the user on the content server, and a fourth correspondence between the account of the user on the content server and the identifier of the user on the foregoing destination website is stored in the social synchronization apparatus, that the social synchronization apparatus acquires an identifier of the user on the destination website is specifically: acquiring the identifier of the user on the destination website according to the account of the user on the content server, the identifier of the destination website, and the stored fourth correspondence; or
when the first content sharing request further includes the account of the user on the content server, and a fourth correspondence is stored on the content server, that the social synchronization apparatus acquires an identifier of the user on the destination website is specifically: acquiring, from the fourth correspondence stored on the content server, the identifier of the user on the destination website according to the account of the user on the content server and the identifier of the destination website; or
when the first content sharing request further includes the identifier of the user on the destination website, that the social synchronization apparatus acquires an identifier of the user on the destination website is specifically: acquiring the identifier of the user on the destination website from the first content sharing request.

204: The social synchronization apparatus determines, according to the internal ID of the content that the user needs to share and the identifier of the third-party SNS, whether the content that needs to be shared has already been shared on the third-party SNS. When the content has not been shared on the third-party SNS, steps 205 to 208 are performed, and when the content has already been shared on the third-party SNS, steps 209 to 210 are performed.

A first correspondence among the internal ID of the content, the identifier of the third-party SNS, and an external ID of the content on the third-party SNS is stored in the social synchronization apparatus, where the external ID of the content is an identifier generated by the third-party SNS when the content is shared by using the content server for the first time on the third-party SNS. The external ID of the content may be a link address generated by the third-party SNS when the content is shared on the third-party SNS for the first time, or may be represented by a code name such as a number, a word, or a letter, where by using the code name, the third-party SNS may acquire a link address generated when the content is shared on the third-party SNS for the first time. Each correspondence in this embodiment of the present invention may be represented by using a content relationship table, or may be represented by using a content relationship file. In this embodiment of the present invention, description is made by using an example in which a content relationship table is used to store the first correspondence among the internal ID of the content, the identifier of the third-party SNS, and the external ID of the content on the third-party SNS, as shown in Table 1. The first correspondence may also be stored in anther manner, which is not limited in this embodiment.

**Table 1**

| Internal ID of content | Identifier of a third-party SNS | External ID of content |
|---|---|---|
| 00001 | FB | F00001 |
| 00001 | Sina | S00001 |
| 00002 | Sina | S00002 |
| ··· | ··· | ··· |

The social synchronization apparatus queries the content relationship table according to the internal ID of the content, to determine whether the identifier of the third-party SNS is included. If included, it can be determined that the content has already been shared on the third-party SNS; if not included, it can be determined that the content has not been shared on the third-party SNS.

205: When the content has not been shared on the third-party SNS, that is, the content is shared on the third-party SNS for the first time by the user on the content server, the social synchronization apparatus then sends a content publishing request to the third-party SNS, where the content publishing request includes the internal ID of the content and the identifier of the user on the third-party SNS.

If the first content sharing request carries the link address of the content on the content server, the social synchronization apparatus may obtain the link address of the content on the content server from the first content sharing request; if the first content sharing request does not carry the link address of the content on the content server, the social synchronization apparatus may obtain the link address of the content on the content server from the content server according to the internal ID of the content. Herein, the content publishing request may not include the link address of the content on the content server, or the content publishing request may include the link address of the content on the content server. Under special circumstances, if the internal ID is the link address of the content on the content server, the content publishing request may not include the link address of the content on the content server.

206: After receiving the content publishing request, the third-party SNS acquires, according to the identifier of the user on the third-party SNS, an account of the user on the third-party SNS that is corresponding to the identifier of the user on the third-party SNS, publishes the content on the home page of the user on the third-party SNS, and generates an external ID of the content on the third-party SNS at the same time.

There may be two manners for publishing the content on the home page of the user on the third-party SNS. In a first manner, the link address corresponding to the content may be published on the home page of the user on the third-party SNS; in a second manner, the third-party SNS acquires, from the content server according to the link address carried in the content publishing request, specific content corresponding to the link address, and publishes the content on the home page of the user on the third-party SNS, or the third-party SNS acquires, from the content server according to the internal ID of the content carried in the content publishing request, specific content corresponding to the internal ID of the content, and publishes the specific content on the home page of the user on the third-party SNS.

207: The third-party SNS sends a content publishing response to the social synchronization apparatus, where the content publishing response includes the internal ID of the content, the identifier of the third-party SNS, and the external ID of the content.

208: The social synchronization apparatus receives the content publishing response, and stores a first correspondence among the internal ID of the content, the identifier of the third-party SNS, and the external ID of the content.

Specifically, the correspondence among the internal ID of the content, the identifier of the third-party SNS, and the external ID of the content is added to the content relationship table.

209: When the content has been shared on the third-party SNS, that is, the content is not shared on the third-party SNS for the first time, the social synchronization apparatus acquires, from the content relationship table according to the internal ID of the content and the identifier of the third-party SNS, an external ID of the corresponding content on the third-party SNS that is corresponding to the internal ID of the content, and sends a second content sharing request to the third-party SNS, where the second content sharing request carries the external ID of the content and the identifier of the user on the third-party SNS.

210: After receiving the second content sharing request, the third-party SNS first determines, according to the external ID of the content, that a user of the third-party SNS has already shared the content corresponding to the external ID of the content, and the third-party SNS acquires, by using the external ID of the content, the link address of the content that is generated when the content is shared on the third-party SNS for the first time; and then the third-party SNS learns about, according to the identifier of user on the third-party SNS, the home page corresponding to the account of the user on the third-party SNS that is corresponding to the identifier of the user on the third-party SNS, and publishes, on the home page of the user on the third-party SNS, the link address of the content that is generated when the content is shared on the third-party SNS for the first time. In this way, the content is successfully shared on the home page of the user on the third-party SNS.

In this way, provided that the content on the content server has already been shared on the third-party SNS, when the same content is shared on the third-party SNS again, what is published by a user on a home page of the user on the third-party SNS is always the link address of the content that is generated when the content is shared on the third-party SNS for the first time. In this way, statistics about a quantity of times the content is shared on the third-party SNS can be collected according to the same shared link address or external ID of the content, so that attention to the content on the third-party SNS can be accurately reflected, and popularity of the content on the third-party SNS can be further increased, thereby magnifying a propagation effect of the content.

After the user shares the content on the third-party SNS, a user on the content server may comment on the content on the content server. When the comment is made, the process may include the following:

211: A user on the content server comments, by using a terminal, on the content on the content server, the content server generates an internal ID of the comment and stores the comment and the internal ID of the comment, and the user sends a first comment sharing request to the content server by using the terminal, where the first comment sharing request includes the comment, the internal ID of the comment, the identifier of the third-party SNS, and the internal ID of the commented content.

The user may be the user who publishes the content, and may also be another user registered on the content server.

212: After receiving the comment sharing request sent by the terminal, the content server sends the first comment sharing request to the social synchronization apparatus.

213: After receiving the first comment sharing request, the social synchronization apparatus obtains the external ID of the commented content from the content relationship table according to the identifier of the third-party SNS and the internal ID of the commented content, and sends a second comment sharing request to the third-party SNS according to the external ID of the commented content, where the second comment sharing request includes the internal ID of the comment, the comment, and the external ID of the commented content.

214: The third-party SNS receives the second comment sharing request, displays the comment on the content on the third-party SNS, generates an external ID of the comment on the third-party SNS, and sends a comment sharing response to the social synchronization apparatus, where the comment sharing response includes the external ID of the commented content and the external ID of the commented content.

215: The social synchronization apparatus receives the comment sharing response sent by the third-party SNS, and stores a second correspondence among the internal identifier of the content, the external ID of the commented content, and the external ID of the comment.

The social synchronization apparatus may store the correspondence among the internal ID of the content, the internal ID of the comment, and the external ID of the comment in a comment relationship table, where the comment relationship table is shown in Table 2. After receiving the comment sharing response, the social synchronization apparatus adds the correspondence among the internal ID of the commented content, the external ID of the comment, and the internal ID of the content to the comment relationship table.

**Table 2**

| Internal ID of content | Internal ID of comment | External ID of comment |
|---|---|---|
| F00001 | P00001 | 123456 |
| F00001 | P00002 | 234567 |
| ... | ... | ... |

In order to increase comments on the content on the content server and attract more users to follow the content, the social synchronization apparatus may acquire various comments on the content on the third-party SNS and send the comments to the content server. The social synchronization apparatus may periodically acquire all latest comments on a piece of content from each third-party SNS, and may also acquire all latest comments on a piece of content when triggered by an event.

216: The social synchronization apparatus sends a comment acquisition request to the third-party SNS, where the comment acquisition request includes the external ID of the content.

217: The third-party SNS receives the comment acquisition request, obtains, according to the external ID of the content, all comments on the content corresponding to the external ID and external IDs of the comments, and sends a comment acquisition response to the social synchronization apparatus, where the comment acquisition response carries a third correspondence between a comment on the content and an external ID of the comment.

The comment acquisition response carries all the comments on the content on the third-party SNS and the corresponding external identifiers of the comments. Among all the comments on the content, some are published by a user of the third-party SNS, and some are shared by a user of the content server.

218: After receiving the comment acquisition response, the social synchronization apparatus performs deduplication and convergence on all the comments on the content.

The social synchronization apparatus acquires the external identifiers of all the comments on the content from the second correspondence according to the second correspondence and the internal identifier of the content; searches the second correspondence and the third correspondence for a duplicate external identifier of a comment, and deletes, from the third correspondence, the comment corresponding to the duplicate external identifier of the comment; and sends a remaining comment in the third correspondence after the deletion to the content server according to the internal identifier of the content, so that the content server publishes the remaining comment to the content.

In this embodiment of the present invention, a first correspondence is stored in a social synchronization apparatus; when receiving a first content sharing request, the social synchronization apparatus first queries the stored first correspondence according to the first correspondence and an internal identifier of content, to acquire an external identifier of the content on a third-party SNS, and then sends a second content sharing request including the external identifier of the content to the third-party SNS. In this way, the content can be shared on the third-party SNS. Further, because the second content sharing request includes the external identifier of the existing content, the third-party SNS may publish the existing content on a home page of a user according to the external identifier of the existing content. In this way, when same content is shared on a same destination website by different users, the content is associated, thereby increasing attention and popularity of the content on the destination website.

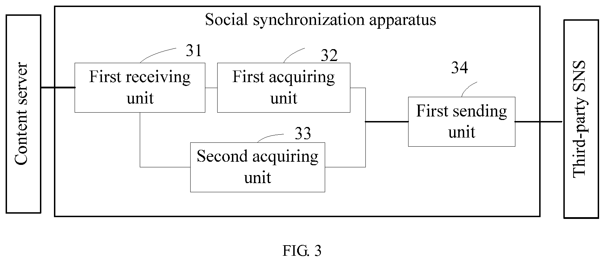

As shown in FIG. 3, the present invention further provides a social synchronization apparatus, including:
a first receiving unit 31, configured to receive a first content sharing request sent by a content server, where the first content sharing request includes an internal identifier of content that a user requests to share and an identifier of a destination website, where the internal identifier of the content is an identifier of the content on the content server;
a first acquiring unit 32, configured to acquire an identifier of the user on the destination website;
a second acquiring unit 33, configured to acquire the internal identifier of the content and the identifier of the destination website from the first receiving unit, and query a stored first correspondence among the internal identifier of the content, the identifier of the destination website, and an external identifier of the content according to the internal identifier of the content and the identifier of the destination website, to acquire the external identifier of the content on the destination website, where the external identifier of the content is an identifier generated by the destination website for the content when the content is shared by using the content server for the first time on the destination website; and
a first sending unit 34, configured to receive the external identifier that is acquired by the second acquiring unit and that is corresponding to the content on the destination website, and send a second content sharing request to the destination website according to the identifier of the destination website and the identifier of the user on the destination website, where the second content sharing request carries the external identifier of the content and the identifier of the user on the destination website, so as to share the content on a home page of the user on the destination website.

It can be seen from the technical solution provided in this embodiment of the present invention that a first correspondence is stored in a social synchronization apparatus; when receiving a first content sharing request, the social synchronization apparatus first queries the stored first correspondence according to the first correspondence and an internal identifier of content, to acquire an external identifier of content on a destination website, and then sends a second content sharing request including the external identifier of the content to the destination website. In this way, the content can be shared on the destination website. Further, because the second content sharing request includes the external identifier of the existing content, the destination website can send the existing content on a home page of a user according to the external identifier of the existing content. In this way, when same content is shared on a same destination website by different users, the content is associated, so that attention to the content on the destination website can be accurately reflected.

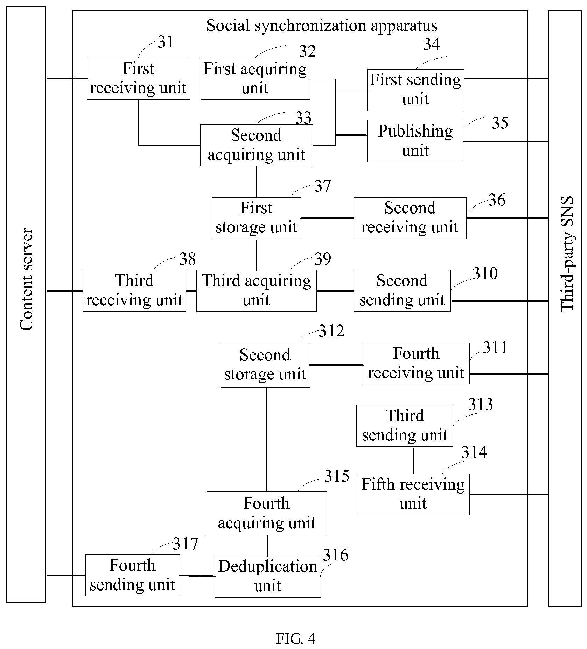

Optionally, as shown in FIG. 4, the social synchronization apparatus further includes: a publishing unit 35, configured to: when no external identifier corresponding to the content on the destination website is acquired by querying the stored first correspondence according to the internal identifier of the content and the identifier of the destination website, send a content publishing request to the destination website according to the identifier of the destination website and the identifier of the user on the destination website, where the content publishing request carries the internal identifier of the content and the identifier of the user on the destination website, so as to publish the content on the home page of the user on the destination website; a second receiving unit 36, configured to receive a content publishing response returned by the destination website, where the content publishing response includes an external identifier of the content; and a first storage unit 37, configured to receive the external identifier of the content that is sent by the second receiving unit, and store a first correspondence among the internal identifier of the content, the identifier of the destination website, and the external identifier of the content.

Optionally, as shown in FIG. 4, the social synchronization apparatus further includes:
a third receiving unit 38, configured to receive a first comment sharing request, sent by the content server, to comment on the content, where the first comment sharing request includes the internal identifier of the content, an internal identifier of a comment, the identifier of the destination website, and the comment, where the internal identifier of the comment is an identifier of the comment on the content server; a third acquiring unit 39, configured to receive the internal identifier of the content and the identifier of the destination website that are sent by the third receiving unit, and acquire, according to the internal identifier of the content, the identifier of the destination website, and the stored first correspondence, the external identifier of the content that is on the destination website and corresponding to the internal identifier of the content; a second sending unit 310, configured to receive the external identifier of the content that is sent by the third acquiring unit, and send a second comment sharing request to comment on the content to the destination website according to the external identifier of the content and the identifier of the destination website, where the second comment sharing request includes the comment and the external identifier of the content, so as to publish the comment to the content on the destination website; a fourth receiving unit 311, configured to receive a comment sharing response sent by the destination website, where the comment sharing response includes an external identifier of the comment and the external identifier of the content, where the external identifier of the comment is generated when the comment is published to the content on the destination website; and a second storage unit 312, configured to receive the external identifier of the comment and the external identifier of the content that are sent by the fourth receiving unit, and store a second correspondence among the internal identifier of the content, the internal identifier of the comment, and the external identifier of the comment.

Optionally, as shown in FIG. 4, the social synchronization apparatus further includes:
a third sending unit 313, configured to send a comment acquisition request to the destination website, where the comment acquisition request includes the external identifier of the content; and a fifth receiving unit 314, configured to receive a comment acquisition response returned by the destination website, where the comment acquisition response includes a third correspondence between each comment on the content and an external identifier corresponding to each comment.

Optionally, as shown in FIG. 4, the social synchronization apparatus further includes:
a fourth acquiring unit 315, configured to acquire external identifiers of all comments on the content from the second correspondence according to the second correspondence and the internal identifier of the content; a deduplication unit 316, configured to delete, from the third correspondence, a comment with a duplicate external identifier of the comment in the second correspondence and the external identifier of the comment according to the external identifier of each comment on the content in the third correspondence and the external identifiers of all the comments on the same content in the second correspondence; and a fourth sending unit 317, configured to send a comment in the third correspondence after the deletion to the content server according to the internal identifier of the content, so that the content server publishes the comment to the content.

Optionally, as shown in FIG. 4, the first acquiring unit of the social synchronization apparatus is specifically configured to: when the first content sharing request further includes an account of the user on the content server, acquire the identifier of the user on the destination website according to the account of the user on the content server, the identifier of the destination website, and a stored fourth correspondence between the account of the user on the content server and the identifier of the user on the destination website; or when the first content sharing request further includes an account of the user on the content server, acquire, from a fourth correspondence stored on the content server, the identifier of the user on the destination website according to the account of the user on the content server and the identifier of the destination website; or when the first content sharing request further includes the identifier of the user on the destination website, acquire the identifier of the user on the destination website from the first content sharing request.

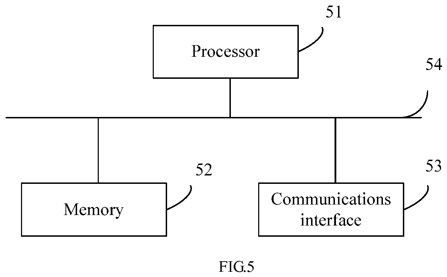

The social synchronization apparatus in this embodiment of the present invention may be implemented based on a computer system. Both the methods shown in FIG. 1 and FIG. 2 can be implemented in the social synchronization apparatus that is based on the computer system. FIG. 5 shows an embodiment of the social synchronization apparatus that is implemented based on the computer system. The social synchronization apparatus in this embodiment may include: a processor 51, a memory 52, and a communications interface 53. The memory 52 is configured to store program code. The processor 51 is configured to execute the program code stored in the memory 52. In an embodiment of the present invention, the memory 52 stores first program code, and the processor 51 is configured to execute the first program code, which includes performing the following operations: receiving a first content sharing request sent by a content server, where the first content sharing request includes an internal identifier of content that a user requests to share and an identifier of a destination website, where the internal identifier of the content is an identifier of the content on the content server; acquiring an identifier of the user on the destination website; querying a stored first correspondence among the internal identifier of the content, the identifier of the destination website, and an external identifier of the content according to the internal identifier of the content and the identifier of the destination website, to acquire the external identifier of the content on the destination website, where the external identifier of the content is an identifier generated by the destination website for the content when the content is shared by using the content server for the first time on the destination website; and sending a second content sharing request to the destination website according to the identifier of the destination website and the identifier of the user on the destination website, where the second content sharing request carries the external identifier of the content and the identifier of the user on the destination website, so as to share the content on a home page of the user on the destination website. The communications interface 53 is configured to communicate with an external device, for example, with the content server or the destination website. All messages exchanged between the social synchronization apparatus and the content server or the destination website (as shown in the method embodiments in FIG. 1 and FIG. 2) are sent and received by using the communications interface 53. The processor 51 processes, according to the program code in the memory 52, the messages received by the communications interface 53, and interacts with the external device by using the communications interface 53. The processor 51 may be a central processing unit (central processing unit, CPU), an application-specific integrated circuit (application-specific integrated circuit, ASIC), and the like. The social synchronization apparatus in this embodiment may include a bus 54. The processor 51, the memory 52, and the communications interface 53 may be connected and communicate with each other by using the bus 54. The memory 52 may include an entity with a storage function, such as a random access memory (random access memory, RAM), a read-only memory (read-only memory, ROM), and a magnetic disk. A call context in this embodiment of the present invention may be temporarily stored in the RAM.

Content such as information exchange and an execution process between the modules in the apparatus and system is based on a same concept as the method embodiments of the present invention. For detailed content, reference may be made to descriptions in the method embodiments of the present invention, and details are not described herein again.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The storage medium may include: a magnetic disk, an optical disc, a read-only memory (ROM: Read-Only Memory), or a random access memory (RAM: Random Access Memory).

Specific examples are used in this specification to describe the principle and implementation manners of the present invention. The descriptions of the embodiments are merely intended to help understand the method. In addition, with respect to the implementation manners and the application scope, modifications may be made by a person of ordinary skill in the art according to the idea of the present invention. Therefore, this specification shall not be construed as a limitation on the present invention.

## Claims

1. A content sharing method, comprising the steps of :
receiving (101), by a social synchronization apparatus, a first content sharing request sent by a content server, wherein the first content sharing request comprises an internal identifier of content that a user requests to share and an identifier of a destination website, wherein the internal identifier of the content is an identifier of the content on the content server;
acquiring (102), by the social synchronization apparatus, an identifier of the user on the destination website;
querying (103), by the social synchronization apparatus, a stored first correspondence among the internal identifier of the content, the identifier of the destination website, and an external identifier of the content according to the internal identifier of the content and the identifier of the destination website, to acquire the external identifier of the content on the destination website, wherein the external identifier of the content is an identifier generated by the destination website for the content when the content is shared by using the content server for the first time on the destination website; sending (104), by the social synchronization apparatus, a second content sharing request to the destination website according to the identifier of the destination website and the identifier of the user on the destination website, wherein the second content sharing request carries the external identifier of the content and the identifier of the user on the destination website, so as to share the content on a home page of the user on the destination website;
when no external identifier corresponding to the content on the destination website is acquired by querying the stored first correspondence according to the internal identifier of the content and the identifier of the destination website, sending a content publishing request to the destination website according to the identifier of the destination website and the identifier of the user on the destination website, wherein the content publishing request carries the internal identifier of the content and the identifier of the user on the destination website, so as to publish the content on the home page of the user on the destination website; receiving a content publishing response returned by the destination website, wherein the content publishing response comprises an external identifier of the content; and storing a first correspondence among the internal identifier of the content, the identifier of the destination website, and the external identifier of the content.

2. The method according to claim 1, further comprising the steps of:
receiving a first comment sharing request, sent by the content server, to comment on the content, wherein the first comment sharing request comprises the internal identifier of the content, an internal identifier of a comment, the identifier of the destination website, and the comment, wherein the internal identifier of the comment is an identifier of the comment on the content server;
acquiring, according to the internal identifier of the content, the identifier of the destination website, and the stored first correspondence, the external identifier of the content that is on the destination website and corresponding to the internal identifier of the content;
sending a second comment sharing request to comment on the content to the destination website according to the external identifier of the content and the identifier of the destination website, wherein the second comment sharing request comprises the comment and the external identifier of the content, so as to publish the comment to the content on the destination website;
receiving a comment sharing response sent by the destination website, wherein the comment sharing response comprises an external identifier of the comment and the external identifier of the content, wherein the external identifier of the comment is generated when the comment is published to the content on the destination website; and
storing a second correspondence among the internal identifier of the content, the internal identifier of the comment, and the external identifier of the comment.

3. The method according to claim 2, further comprises the steps of:
sending a comment acquisition request to the destination website, wherein the comment acquisition request comprises the external identifier of the content; and
receiving a comment acquisition response returned by the destination website, wherein the comment acquisition response comprises a third correspondence between the comment on the content and the external identifier of the comment.

4. The method according to claim 3, further comprising the steps of:
acquiring external identifiers of all comments on the content from the second correspondence according to the second correspondence and the internal identifier of the content;
searching the second correspondence and the third correspondence for a duplicate external identifier of a comment, and deleting, from the third correspondence, the comment corresponding to the duplicate external identifier of the comment; and
sending a remaining comment in the third correspondence after the deletion to the content server according to the internal identifier of the content, so that the content server publishes the remaining comment to the content.

5. The method according to any one of claims 1 to 4, wherein when the first content sharing request further comprises an account of the user on the content server, the acquiring an identifier of the user on the destination website is specifically: acquiring the identifier of the user on the destination website according to the account of the user on the content server, the identifier of the destination website, and a stored fourth correspondence between the account of the user on the content server and the identifier of the user on the destination website; or
when the first content sharing request further comprises an account of the user on the content server, the acquiring an identifier of the user on the destination website is specifically: acquiring, from a fourth correspondence stored on the content server, the identifier of the user on the destination website according to the account of the user on the content server and the identifier of the destination website; or
when the first content sharing request further comprises the identifier of the user on the destination website, the acquiring an identifier of the user on the destination website is specifically: acquiring the identifier of the user on the destination website from the first content sharing request.

6. A social synchronization apparatus, comprising:
a first receiving unit (31), configured to receive a first content sharing request sent by a content server, wherein the first content sharing request comprises an internal identifier of content that a user requests to share and an identifier of a destination website, wherein the internal identifier of the content is an identifier of the content on the content server;
a first acquiring unit (32), configured to acquire an identifier of the user on the destination website;
a second acquiring unit (33), configured to acquire the internal identifier of the content and the identifier of the destination website from the first receiving unit, and query a stored first correspondence among the internal identifier of the content, the identifier of the destination website, and an external identifier of the content according to the internal identifier of the content and the identifier of the destination website, to acquire the external identifier of the content on the destination website, wherein the external identifier of the content is an identifier generated by the destination website for the content when the content is shared by using the content server for the first time on the destination website;
a first sending unit (34), configured to receive the external identifier that is acquired by the second acquiring unit and that is corresponding to the content on the destination website, and send a second content sharing request to the destination website according to the identifier of the destination website and the identifier of the user on the destination website, wherein the second content sharing request carries the external identifier of the content and the identifier of the user on the destination website, so as to share the content on a home page of the user on the destination website; a publishing unit (35), configured to: when no external identifier corresponding to the content on the destination website is acquired by querying the stored first correspondence according to the internal identifier of the content and the identifier of the destination website, send a content publishing request to the destination website according to the identifier of the destination website and the identifier of the user on the destination website, wherein the content publishing request carries the internal identifier of the content and the identifier of the user on the destination website, so as to publish the content on the home page of the user on the destination website;
a second receiving unit (36), configured to receive a content publishing response returned by the destination website, wherein the content publishing response comprises an external identifier of the content; and
a first storage unit (37), configured to receive the external identifier of the content that is sent by the second receiving unit, and store a first correspondence among the internal identifier of the content, the identifier of the destination website, and the external identifier of the content.

7. The social synchronization apparatus according to claim 6, further comprising:
a third receiving unit (38), configured to receive a first comment sharing request, sent by the content server, to comment on the content, wherein the first comment sharing request comprises the internal identifier of the content, an internal identifier of a comment, the identifier of the destination website, and the comment, wherein the internal identifier of the comment is an identifier of the comment on the content server;
a third acquiring unit (39), configured to receive the internal identifier of the content and the identifier of the destination website that are sent by the third receiving unit, and acquire, according to the internal identifier of the content, the identifier of the destination website, and the stored first correspondence, the external identifier of the content that is on the destination website and corresponding to the internal identifier of the content;
a second sending unit (310), configured to receive the external identifier of the content that is sent by the third acquiring unit, and send a second comment sharing request to comment on the content to the destination website according to the external identifier of the content and the identifier of the destination website, wherein the second comment sharing request comprises the comment and the external identifier of the content, so as to publish the comment to the content on the destination website;
a fourth receiving unit (311), configured to receive a comment sharing response sent by the destination website, wherein the comment sharing response comprises an external identifier of the comment and the external identifier of the content, wherein the external identifier of the comment is generated when the comment is published to the content on the destination website; and
a second storage unit (312), configured to receive the external identifier of the comment and the external identifier of the content that are sent by the fourth receiving unit, and store a second correspondence among the internal identifier of the content, the internal identifier of the comment, and the external identifier of the comment.

8. The social synchronization apparatus according to claim 7, further comprising:
a third sending unit (313), configured to send a comment acquisition request to the destination website, wherein the comment acquisition request comprises the external identifier of the content; and
a fifth receiving unit (314), configured to receive a comment acquisition response returned by the destination website, wherein the comment acquisition response comprises a third correspondence between the comment on the content and the external identifier of the comment.

9. The social synchronization apparatus according to claim 8, further comprising:
a fourth acquiring unit (315), configured to acquire external identifiers of all comments on the content from the second correspondence according to the second correspondence and the internal identifier of the content;
a deduplication unit (316), configured to delete, from the third correspondence, a comment with a duplicate external identifier of the comment in the second correspondence and the external identifier of the comment according to an external identifier of each comment on the content in the third correspondence and the external identifiers of all the comments on the same content in the second correspondence; and
a fourth sending unit (317), configured to send a comment in the third correspondence after the deletion to the content server according to the internal identifier of the content, so that the content server publishes the comment to the content.

10. The social synchronization apparatus according to claim 6, wherein the first acquiring unit (32) is specifically configured to: when the first content sharing request further comprises an account of the user on the content server, acquire the identifier of the user on the destination website according to the account of the user on the content server, the identifier of the destination website, and a stored fourth correspondence between the account of the user on the content server and the identifier of the user on the destination website; or when the first content sharing request further comprises an account of the user on the content server, acquire, from a fourth correspondence stored on the content server, the identifier of the user on the destination website according to the account of the user on the content server and the identifier of the destination website; or when the first content sharing request further comprises the identifier of the user on the destination website, acquire the identifier of the user on the destination website from the first content sharing request.

## Patentansprüche

1. Verfahren zur gemeinsamen Nutzung von Inhalten, umfassend die Schritte:
Empfangen (101) einer durch einen Inhaltsserver gesendeten ersten Anfrage zur gemeinsamen Nutzung von Inhalten durch eine soziale Synchronisierungsvorrichtung, wobei die erste Anfrage zur gemeinsamen Nutzung von Inhalten eine interne Kennung von Inhalten, für die ein Nutzer eine gemeinsame Nutzung anfragt, und eine Kennung einer Zielwebseite umfasst, wobei es sich bei der internen Kennung der Inhalte um eine Kennung der Inhalte auf dem Inhaltsserver handelt,
Beziehen (102) einer Kennung des Nutzers auf der Zielwebseite durch die soziale Synchronisierungsvorrichtung,
Abfragen (103), durch die soziale Synchronisierungsvorrichtung, einer gespeicherten ersten Korrespondenz unter der internen Kennung der Inhalte, der Kennung der Zielwebseite und einer externen Kennung der Inhalte gemäß der internen Kennung der Inhalte und der Kennung der Zielwebseite, um die externe Kennung der Inhalte auf der Zielwebseite zu beziehen, wobei es sich bei der externen Kennung der Inhalte um eine Kennung handelt, die durch die Zielwebseite für die Inhalte erzeugt wird, wenn die Inhalte durch Verwendung des Inhaltsservers erstmals auf der Zielwebseite gemeinsam genutzt werden, Senden (104), durch die soziale Synchronisierungsvorrichtung, einer zweiten Anfrage zur gemeinsamen Nutzung von Inhalten an die Zielwebseite gemäß der Kennung der Zielwebseite und der Kennung des Nutzers auf der Zielwebseite, wobei die zweite Anfrage zur gemeinsamen Nutzung von Inhalten die externe Kennung der Inhalte und die Kennung des Nutzers auf der Zielwebseite enthält, um die Inhalte auf einer Homepage des Nutzers auf der Zielwebseite gemeinsam zu nutzen,
wenn durch Abfragen der gespeicherten ersten Korrespondenz gemäß der internen Kennung der Inhalte und der Kennung der Zielwebseite keine mit den Inhalten auf der Zielwebseite korrespondierende externe Kennung bezogen wird, Senden einer Anfrage zur Veröffentlichung von Inhalten an die Zielwebseite gemäß der Kennung der Zielwebseite und der Kennung des Nutzers auf der Zielwebseite, wobei die Anfrage zur Veröffentlichung von Inhalten die interne Kennung der Inhalte und die Kennung des Nutzers auf der Zielwebseite enthält, um die Inhalte auf der Homepage des Nutzers auf der Zielwebseite zu veröffentlichen, Empfangen einer durch die Zielwebseite zurückgesendeten Antwort zur Veröffentlichung von Inhalten, wobei die Antwort zur Veröffentlichung von Inhalten eine externe Kennung der Inhalte umfasst, und Speichern einer ersten Korrespondenz unter der internen Kennung der Inhalte, der Kennung der Zielwebseite und der externen Kennung der Inhalte.

2. Verfahren nach Anspruch 1, ferner umfassend die Schritte:
Empfangen einer durch den Inhaltsserver gesendeten ersten Anfrage zur gemeinsamen Nutzung von Kommentaren, um die Inhalte zu kommentieren, wobei die erste Anfrage zur gemeinsamen Nutzung von Kommentaren die interne Kennung der Inhalte, eine interne Kennung eines Kommentars, die Kennung der Zielwebseite und den Kommentar umfasst, wobei es sich bei der internen Kennung des Kommentars um eine Kennung des Kommentars auf dem Inhaltsserver handelt,
Beziehen der externen Kennung der Inhalte, die sich auf der Zielwebseite befinden und mit der internen Kennung der Inhalte korrespondieren, gemäß der internen Kennung der Inhalte, der Kennung der Zielwebseite und der gespeicherten ersten Korrespondenz,
Senden einer zweiten Anfrage zur gemeinsamen Nutzung von Kommentaren, um die Inhalte zu kommentieren, an die Zielwebseite gemäß der externen Kennung der Inhalte und der Kennung der Zielwebseite, wobei die zweite Anfrage zur gemeinsamen Nutzung von Kommentaren den Kommentar und die externe Kennung der Inhalte umfasst, um den Kommentar für die Inhalte auf der Zielwebseite zu veröffentlichen, Empfangen einer durch die Zielwebseite gesendeten Antwort zur gemeinsamen Nutzung von Kommentaren, wobei die Antwort zur gemeinsamen Nutzung von Kommentaren eine externe Kennung des Kommentars und die externe Kennung der Inhalte umfasst, wobei die externe Kennung des Kommentars erzeugt wird, wenn der Kommentar für die Inhalte auf der Zielwebseite veröffentlicht wird, und
Speichern einer zweiten Korrespondenz unter der internen Kennung der Inhalte, der internen Kennung des Kommentars und der externen Kennung des Kommentars.

3. Verfahren nach Anspruch 2, ferner umfassend die Schritte:
Senden einer Anfrage zum Bezug von Kommentaren an die Zielwebseite, wobei die Anfrage zum Bezug von Kommentaren die externe Kennung der Inhalte umfasst, und
Empfangen einer durch die Zielwebseite zurückgesendeten Antwort zum Bezug von Kommentaren, wobei die Antwort zum Bezug von Kommentaren eine dritte Korrespondenz zwischen dem Kommentar zu den Inhalten und der externen Kennung des Kommentars umfasst.

4. Verfahren nach Anspruch 3, ferner umfassend die Schritte:
Beziehen externer Kennungen aller Kommentare zu den Inhalten aus der zweiten Korrespondenz gemäß der zweiten Korrespondenz und der internen Kennung der Inhalte,
Durchsuchen der zweiten Korrespondenz und der dritten Korrespondenz nach einer doppelt vorliegenden externen Kennung eines Kommentars und Löschen des mit der doppelt vorliegenden externen Kennung des Kommentars korrespondierenden Kommentars aus der dritten Korrespondenz und
Senden eines verbleibenden Kommentars in der dritten Korrespondenz nach der Löschung an den Inhaltsserver gemäß der internen Kennung der Inhalte, so dass der Inhaltsserver den verbleibenden Kommentar für die Inhalte veröffentlicht.

5. Verfahren nach einem der Ansprüche 1 bis 4, wobei, wenn die erste Anfrage zur gemeinsamen Nutzung von Inhalten ferner einen Account des Nutzers auf dem Inhaltsserver umfasst, das Beziehen einer Kennung des Nutzers auf der Zielwebseite speziell in Folgendem besteht: Beziehen der Kennung des Nutzers auf der Zielwebseite gemäß dem Account des Nutzers auf dem Inhaltsserver, der Kennung der Zielwebseite und einer gespeicherten vierten Korrespondenz zwischen dem Account des Nutzers auf dem Inhaltsserver und der Kennung des Nutzers auf der Zielwebseite, oder, wenn die erste Anfrage zur gemeinsamen Nutzung von Inhalten ferner einen Account des Nutzers auf dem Inhaltsserver umfasst, das Beziehen einer Kennung des Nutzers auf der Zielwebseite speziell in Folgendem besteht: Beziehen, aus einer auf dem Inhaltsserver gespeicherten vierten Korrespondenz, der Kennung des Nutzers auf der Zielwebseite gemäß dem Account des Nutzers auf dem Inhaltsserver und der Kennung der Zielwebseite, oder,
wenn die erste Anfrage zur gemeinsamen Nutzung von Inhalten ferner die Kennung des Nutzers auf der Zielwebseite umfasst, das Beziehen einer Kennung des Nutzers auf der Zielwebseite speziell in Folgendem besteht: Beziehen der Kennung des Nutzers auf der Zielwebseite aus der ersten Anfrage zur gemeinsamen Nutzung von Inhalten.

6. Soziale Synchronisierungsvorrichtung, umfassend:
eine erste Empfangseinheit (31), die dafür konfiguriert ist, eine durch einen Inhaltsserver gesendete erste Anfrage zur gemeinsamen Nutzung von Inhalten zu empfangen, wobei die erste Anfrage zur gemeinsamen Nutzung von Inhalten eine interne Kennung von Inhalten, für die ein Nutzer eine gemeinsame Nutzung anfragt, und eine Kennung einer Zielwebseite umfasst, wobei es sich bei der internen Kennung der Inhalte um eine Kennung der Inhalte auf dem Inhaltsserver handelt,
eine erste Bezugseinheit (32), die dafür konfiguriert ist, eine Kennung des Nutzers auf der Zielwebseite zu beziehen,
eine zweite Bezugseinheit (33), die dafür konfiguriert ist, die interne Kennung der Inhalte und die Kennung der Zielwebseite von der ersten Empfangseinheit zu beziehen und eine gespeicherte erste Korrespondenz unter der internen Kennung der Inhalte, der Kennung der Zielwebseite und einer externen Kennung der Inhalte gemäß der internen Kennung der Inhalte und der Kennung der Zielwebseite abzufragen, um die externe Kennung der Inhalte auf der Zielwebseite zu beziehen, wobei es sich bei der externen Kennung der Inhalte um eine Kennung handelt, die durch die Zielwebseite für die Inhalte erzeugt wird, wenn die Inhalte durch Verwendung des Inhaltsservers erstmals auf der Zielwebseite gemeinsam genutzt werden,
eine erste Sendeeinheit (34), die dafür konfiguriert ist, die externe Kennung zu empfangen, die durch die zweite Bezugseinheit bezogen wird und die mit den Inhalten auf der Zielwebseite korrespondiert, und eine zweite Anfrage zur gemeinsamen Nutzung von Inhalten an die Zielwebseite gemäß der Kennung der Zielwebseite und der Kennung des Nutzers auf der Zielwebseite zu senden, wobei die zweite Anfrage zur gemeinsamen Nutzung von Inhalten die externe Kennung der Inhalte und die Kennung des Nutzers auf der Zielwebseite enthält, um die Inhalte auf einer Homepage des Nutzers auf der Zielwebseite gemeinsam zu nutzen,
eine Veröffentlichungseinheit (35), die konfiguriert ist, um: wenn durch Abfragen der gespeicherten ersten Korrespondenz gemäß der internen Kennung der Inhalte und der Kennung der Zielwebseite keine mit den Inhalten auf der Zielwebseite korrespondierende externe Kennung bezogen wird, eine Anfrage zur Veröffentlichung von Inhalten an die Zielwebseite gemäß der Kennung der Zielwebseite und der Kennung des Nutzers auf der Zielwebseite zu senden, wobei die Anfrage zur Veröffentlichung von Inhalten die interne Kennung der Inhalte und die Kennung des Nutzers auf der Zielwebseite enthält, um die Inhalte auf der Homepage des Nutzers auf der Zielwebseite zu veröffentlichen,
eine zweite Empfangseinheit (36), die dafür konfiguriert ist, eine durch die Zielwebseite zurückgesendete Antwort zur Veröffentlichung von Inhalten zu empfangen, wobei die Antwort zur Veröffentlichung von Inhalten eine externe Kennung der Inhalte umfasst, und
eine erste Speichereinheit (37), die dafür konfiguriert ist, die externe Kennung der Inhalte, die durch die zweite Empfangseinheit gesendet wird, zu empfangen und eine erste Korrespondenz unter der internen Kennung der Inhalte, der Kennung der Zielwebseite und der externen Kennung der Inhalte zu speichern.

7. Soziale Synchronisierungsvorrichtung nach Anspruch 6, ferner umfassend:
eine dritte Empfangseinheit (38), die dafür konfiguriert ist, eine durch den Inhaltsserver gesendete erste Anfrage zur gemeinsamen Nutzung von Kommentaren zu empfangen, um die Inhalte zu kommentieren, wobei die erste Anfrage zur gemeinsamen Nutzung von Kommentaren die interne Kennung der Inhalte, eine interne Kennung eines Kommentars, die Kennung der Zielwebseite und den Kommentar umfasst, wobei es sich bei der internen Kennung des Kommentars um eine Kennung des Kommentars auf dem Inhaltsserver handelt,
eine dritte Bezugseinheit (39), die dafür konfiguriert ist, die interne Kennung der Inhalte und die Kennung der Zielwebseite, die durch die dritte Empfangseinheit gesendet werden, zu empfangen und die externe Kennung der Inhalte, die sich auf der Zielwebseite befinden und mit der internen Kennung der Inhalte korrespondieren, gemäß der internen Kennung der Inhalte, der Kennung der Zielwebseite und der gespeicherten ersten Korrespondenz zu beziehen,
eine zweite Sendeeinheit (310), die dafür konfiguriert ist, die externe Kennung der Inhalte, die durch die dritte Bezugseinheit gesendet wird, zu empfangen und eine zweite Anfrage zur gemeinsamen Nutzung von Kommentaren, um die Inhalte zu kommentieren, an die Zielwebseite gemäß der externen Kennung der Inhalte und der Kennung der Zielwebseite zu senden, wobei die zweite Anfrage zur gemeinsamen Nutzung von Kommentaren den Kommentar und die externe Kennung der Inhalte umfasst, um den Kommentar für die Inhalte auf der Zielwebseite zu veröffentlichen, eine vierte Empfangseinheit (311), die dafür konfiguriert ist, eine durch die Zielwebseite gesendete Antwort zur gemeinsamen Nutzung von Kommentaren zu empfangen, wobei die Antwort zur gemeinsamen Nutzung von Kommentaren eine externe Kennung des Kommentars und die externe Kennung der Inhalte umfasst, wobei die externe Kennung des Kommentars erzeugt wird, wenn der Kommentar für die Inhalte auf der Zielwebseite veröffentlicht wird, und
eine zweite Speichereinheit (312), die dafür konfiguriert ist, die externe Kennung des Kommentars und die externe Kennung der Inhalte, die durch die vierte Empfangseinheit gesendet werden, zu empfangen und eine zweite Korrespondenz unter der internen Kennung der Inhalte, der internen Kennung des Kommentars und der externen Kennung des Kommentars zu speichern.

8. Soziale Synchronisierungsvorrichtung nach Anspruch 7, ferner umfassend:
eine dritte Sendeeinheit (313), die dafür konfiguriert ist, eine Anfrage zum Bezug von Kommentaren an die Zielwebseite zu senden, wobei die Anfrage zum Bezug von Kommentaren die externe Kennung der Inhalte umfasst, und
eine fünfte Empfangseinheit (314), die dafür konfiguriert ist, eine durch die Zielwebseite zurückgesendete Antwort zum Bezug von Kommentaren zu empfangen, wobei die Antwort zum Bezug von Kommentaren eine dritte Korrespondenz zwischen dem Kommentar zu den Inhalten und der externen Kennung des Kommentars umfasst.

9. Soziale Synchronisierungsvorrichtung nach Anspruch 8, ferner umfassend:
Eine vierte Bezugseinheit (315), die dafür konfiguriert ist, externe Kennungen aller Kommentare zu den Inhalten aus der zweiten Korrespondenz gemäß der zweiten Korrespondenz und der internen Kennung der Inhalte zu beziehen,
eine Deduplizierungseinheit (316), die dafür konfiguriert ist, aus der dritten Korrespondenz einen Kommentar mit einer doppelt vorhandenen externen Kennung des Kommentars in der zweiten Korrespondenz und die externe Kennung des Kommentars gemäß einer externen Kennung jedes Kommentars zu den Inhalten in der dritten Korrespondenz und die externen Kennungen aller Kommentare zu den gleichen Inhalten in der zweiten Korrespondenz zu löschen, und
eine vierte Sendeeinheit (317), die dafür konfiguriert ist, einen Kommentar in der dritten Korrespondenz nach der Löschung an den Inhaltsserver gemäß der internen Kennung der Inhalte zu senden, so dass der Inhaltsserver den Kommentar für die Inhalte veröffentlicht.

10. Soziale Synchronisierungsvorrichtung nach Anspruch 6, wobei die erste Bezugseinheit (32) speziell konfiguriert ist, um: wenn die erste Anfrage zur gemeinsamen Nutzung von Inhalten ferner einen Account des Nutzers auf dem Inhaltsserver umfasst, die Kennung des Nutzers auf der Zielwebseite gemäß dem Account des Nutzers auf dem Inhaltsserver, der Kennung der Zielwebseite und einer gespeicherten vierten Korrespondenz zwischen dem Account des Nutzers auf dem Inhaltsserver und der Kennung des Nutzers auf der Zielwebseite zu beziehen, oder, wenn die erste Anfrage zur gemeinsamen Nutzung von Inhalten ferner einen Account des Nutzers auf dem Inhaltsserver umfasst, aus einer auf dem Inhaltsserver gespeicherten vierten Korrespondenz die Kennung des Nutzers auf der Zielwebseite gemäß dem Account des Nutzers auf dem Inhaltsserver und der Kennung der Zielwebseite zu beziehen, oder, wenn die erste Anfrage zur gemeinsamen Nutzung von Inhalten ferner die Kennung des Nutzers auf der Zielwebseite umfasst, die Kennung des Nutzers auf der Zielwebseite aus der ersten Anfrage zur gemeinsamen Nutzung von Inhalten zu beziehen.

## Revendications

1. Procédé de partage de contenu, comprenant les étapes consistant à :
recevoir (101), par un appareil de synchronisation sociale, une première demande de partage de contenu envoyée par un serveur de contenu, cette première demande de partage de contenu comprenant un identificateur interne de contenu qu'un utilisateur demande de partager et un identificateur d'un site Web de destination, cet identificateur interne du contenu étant un identificateur du contenu sur le serveur de contenu ;
acquérir (102), par l'appareil de synchronisation sociale, un identificateur de l'utilisateur sur le site Web de destination ;
consulter (103), par l'appareil de synchronisation sociale, une première correspondance stockée parmi l'identificateur interne du contenu, l'identificateur du site Web de destination, et un identificateur externe du contenu en fonction de l'identificateur interne du contenu et de l'identificateur du site Web de destination, afin d'acquérir l'identificateur externe du contenu sur le site Web de destination, l'identificateur externe du contenu étant un identificateur généré par le site Web de destination pour le contenu lorsque le contenu est partagé en utilisant le serveur de contenu pour la première fois sur le site Web de destination ;
envoyer (104), par l'appareil de synchronisation sociale, une deuxième demande de partage de contenu au site Web de destination en fonction de l'identificateur du site Web de destination et de l'identificateur de l'utilisateur sur le site Web de destination, cette deuxième demande de partage de contenu acheminant l'identificateur externe du contenu et l'identificateur de l'utilisateur sur le site Web de destination, de façon à partager le contenu sur une page d'accueil de l'utilisateur sur le site Web de destination ;
lorsqu'aucun identificateur externe correspondant au contenu sur le le site Web de destination n'est acquis en consultant la première correspondance stockée en fonction de l'identificateur interne du contenu et de l'identificateur du site Web de destination, envoyer une demande de publication de contenu au site Web de destination en fonction de l'identificateur du site Web de destination et de l'identificateur de l'utilisateur sur le site Web de destination, cette demande de publication de contenu acheminant l'identificateur interne du contenu et l'identificateur de l'utilisateur sur le site Web de destination, de manière à publier le contenu sur la page d'accueil de l'utilisateur sur le site Web de destination ;
recevoir une réponse de publication de contenu renvoyée par le le site Web de destination, cette réponse de publication de contenu comprenant un identificateur externe du contenu ; et
stocker une première correspondance parmi l'identificateur interne du contenu, l'identificateur du site Web de destination, et l'identificateur externe du contenu.

2. Procédé selon la revendication 1, comprenant en outre les étapes consistant à :
recevoir une première demande de partage de commentaire, envoyée par le serveur de contenu, afin de faire un commentaire sur le contenu, cette première demande de partage de commentaire comprenant l'identificateur interne du contenu, un identificateur interne d'un commentaire, l'identificateur du site Web de destination, et le commentaire, l'identificateur interne du commentaire étant un identificateur du commentaire sur le serveur de contenu ;
acquérir, en fonction de l'identificateur interne du contenu, de l'identificateur du site Web de destination, et de la première correspondance stockée, l'identificateur externe du contenu qui est sur le site Web de destination et qui correspond à l'identificateur interne du contenu ;
envoyer une deuxième demande de partage de commentaire pour faire un commentaire sur le contenu au site Web de destination en fonction de l'identificateur externe du contenu et de l'identificateur du site Web de destination, cette deuxième demande de partage de commentaire comprenant le commentaire et l'identificateur externe du contenu, de façon à publier le commentaire sur le contenu sur le site Web de destination ;
recevoir une réponse de partage de commentaire envoyée par le site Web de destination, cette réponse de partage de commentaire comprenant un identificateur externe du commentaire et l'identificateur externe du contenu, l'identificateur externe du commentaire étant généré lorsque le commentaire est publié sur le contenu sur le site Web de destination ; et à
stocker une deuxième correspondance parmi l'identificateur interne du contenu, l'identificateur interne du commentaire et l'identificateur externe du commentaire.

3. Procédé selon la revendication 2, comprenant en outre les étapes consistant à :
envoyer une demande d'acquisition de commentaire au site Web de destination, cette demande d'acquisition de commentaire comprenant l'identificateur externe du contenu ; et à
recevoir une réponse d'acquisition de commentaire renvoyée par le site Web de destination, cette réponse d'acquisition de commentaire comprenant une troisième correspondance entre le commentaire sur le contenu et l'identificateur externe du commentaire.

4. Procédé selon la revendication 3, comprenant en outre les étapes consistant à :
acquérir des identificateurs externes de tous les commentaires sur le contenu à partir de la deuxième correspondance en fonction de la deuxième correspondance et de l'identificateur externe du contenu ;
rechercher dans la deuxième correspondance et la troisième correspondance un identificateur externe dupliqué d'un commentaire, et supprimer, de la troisième correspondance, le commentaire correspondant à l'identificateur externe dupliqué du commentaire ; et à
envoyer un commentaire restant dans la troisième correspondance après cette suppression au serveur de contenu en fonction de l'identificateur interne du contenu, de manière à ce que le serveur de contenu publie ce commentaire restant sur le contenu.

5. Procédé selon l'une quelconque des revendications 1 à 4, dans lequel, lorsque la première demande de partage de contenu comprend en outre un compte de l'utilisateur sur le serveur de contenu, l'acquisition d'un identificateur de l'utilisateur sur le site Web de destination est spécifiquement : l'acquisition de l'identificateur de l'utilisateur sur le site Web de destination en fonction du compte de l'utilisateur sur le serveur de contenu, de l'identificateur du site Web de destination, et d'une quatrième correspondance stockée entre le compte de l'utilisateur sur le serveur de contenu et l'identificateur de l'utilisateur sur le site Web de destination ; ou
lorsque la première demande de partage de contenu comprend en outre un compte de l'utilisateur sur le serveur de contenu, l'acquisition d'un identificateur de l'utilisateur sur le site Web de destination est spécifiquement : l'acquisition, à partir d'une quatrième correspondance stockée sur le serveur de contenu, de l'identificateur de l'utilisateur sur le site Web de destination en fonction du compte de l'utilisateur sur le serveur de contenu et de l'identificateur du site Web de destination ; ou
lorsque la première demande de partage de contenu comprend en outre l'identificateur de l'utilisateur sur le site Web de destination, l'acquisition d'un utilisateur de l'utilisateur sur le site Web de destination est spécifiquement : l'acquisition de l'identificateur de l'utilisateur sur le site Web de destination à partir de la première demande de partage de contenu.

6. Appareil de synchronisation sociale, comprenant :
une première unité de réception (31), configurée de façon à recevoir une première demande de partage de contenu envoyée par un serveur de contenu, cette première demande de partage de contenu comprenant un identificateur interne de contenu qu'un utilisateur demande de partager et un identificateur d'un site Web de destination, cet identificateur interne du contenu étant un identificateur du contenu sur le serveur de contenu;
une première unité d'acquisition (32), configurée de façon à acquérir un identificateur de l'utilisateur sur le site Web de destination ;
une deuxième unité d'acquisition (33), configurée de façon à acquérir l'identificateur interne du contenu et l'identificateur du site Web de destination à partir de la première unité de réception, et à consulter une première correspondance stockée parmi l'identificateur interne du contenu, l'identificateur du site Web de destination, et un identificateur externe du contenu en fonction de l'identificateur interne du contenu et de l'identificateur du site Web de destination, de façon à acquérir l'identificateur externe du contenu sur le site Web de destination, cet identificateur externe du contenu étant généré par le site Web de destination pour le contenu lorsque le contenu est partagé en utilisant le serveur de contenu pour la première fois sur le site Web de destination ;
une première unité d'envoi (34), configurée de façon à recevoir l'identificateur externe qui est acquis par la deuxième unité d'acquisition et qui correspond au contenu sur le système d'exploitation, et à envoyer une deuxième demande de partage de contenu au site Web de destination en fonction de l'identificateur du site Web de destination et de l'identificateur de l'utilisateur sur le site Web de destination, cette deuxième demande de partage de contenu acheminant l'identificateur externe du contenu et l'identificateur de l'utilisateur sur le site Web de destination, de manière à partager le contenu sur une page d'accueil de l'utilisateur sur le site Web de destination ;
une unité de publication (35), configurée de façon à : lorsqu'aucun identificateur externe correspondant au contenu sur le site Web de destination n'est acquis en consultant la première correspondance stockée en fonction de l'identificateur interne du contenu et de l'identificateur du site Web de destination, envoyer une demande de publication de contenu au site Web de destination en fonction de l'identificateur du site Web de destination et de l'identificateur de l'utilisateur sur le site Web de destination, cette demande de publication de contenu acheminant l'identificateur interne du contenu et l'identificateur de l'utilisateur sur le site Web de destination, de manière à publier le contenu sur la page d'accueil de l'utilisateur sur le site Web de destination ;
une deuxième unité de réception (36), configurée de façon à recevoir une réponse de publication de contenu renvoyée par le site Web de destination, cette réponse de publication de contenu comprenant un identificateur externe du contenu ; et
une première unité de stockage (37), configurée de façon à recevoir l'identificateur externe du contenu qui est envoyé par la deuxième unité de réception et à stocker une première correspondance parmi l'identificateur interne du contenu, l'identificateur du site Web de destination, et l'identificateur externe du contenu.

7. Appareil de synchronisation sociale selon la revendication 6, comprenant en outre :
une troisième unité de réception (38), configurée de façon à recevoir une première demande de partage de commentaire, envoyée par le serveur de contenu, afin de faire un commentaire sur le contenu, cette première demande de partage de commentaire comprenant l'identificateur interne du contenu, un identificateur interne d'un commentaire, l'identificateur du site Web de destination, et le commentaire, l'identificateur interne du commentaire étant un identificateur du commentaire sur le serveur de contenu ;
une troisième unité d'acquisition (39), configurée de façon à recevoir l'identificateur interne du contenu et l'identificateur du site Web de destination qui sont envoyée par la troisième unité de réception, et à acquérir, selon l'identificateur interne du contenu, l'identificateur du site Web de destination, et la première correspondance stockée, l'identificateur externe du contenu qui est sur le site Web de destination et qui correspond à l'identificateur interne du contenu ;
une deuxième unité d'envoi (310), configurée de façon à recevoir l'identificateur externe du contenu qui est envoyé par la troisième unité d'acquisition et à envoyer une deuxième demande de partage de commentaire pour faire un commentaire sur le contenu au site Web de destination en fonction de l'identificateur externe du contenu et de l'identificateur du site Web de destination, cette deuxième demande de partage de commentaire comprenant le commentaire et l'identificateur externe du contenu, de manière à publier le commentaire sur le contenu sur le site Web de destination ;
une quatrième unité de réception (311), configurée de façon à recevoir une réponse de partage de commentaire envoyée par le site Web de destination, cette réponse de partage de commentaire comprenant un identificateur externe du commentaire et l'identificateur externe du contenu, l'identificateur externe du commentaire étant généré lorsque le commentaire est publié sur le contenu sur le site Web de destination ; et
une deuxième unité de stockage (312), configurée de façon à recevoir l'identificateur externe du commentaire et l'identificateur externe du contenu qui sont envoyés par la quatrième unité de réception, et à stocker une deuxième correspondance parmi l'identificateur interne du contenu, l'identificateur interne du commentaire, et l'identificateur externe du commentaire.

8. Appareil de synchronisation sociale selon la revendication 7, comprenant en outre :
une troisième unité d'envoi (313), configurée de façon à envoyer une demande d'acquisition de commentaire au site Web de destination, cette demande d'acquisition de commentaire comprenant l'identificateur externe du contenu ; et
une cinquième unité de réception (314), configurée de façon à recevoir une réponse d'acquisition de commentaire renvoyée par le site Web de destination, cette réponse d'acquisition de commentaire comprenant une troisième correspondance entre le commentaire sur le contenu et l'identificateur externe du commentaire.

9. Appareil de synchronisation sociale selon la revendication 8, comprenant en outre :
une quatrième unité d'acquisition (315), configurée de façon à acquérir des identificateurs externes de tous les commentaires sur le contenu à partir de la deuxième correspondance en fonction de la deuxième correspondance et de l'identificateur externe du contenu ;
une unité de déduplication (316), configurée de façon à supprimer, de la troisième correspondance, un commentaire avec un identificateur externe dupliqué du commentaire dans la deuxième correspondance et l'identificateur externe du commentaire en fonction d'un identificateur externe de chaque commentaire sur le contenu dans la troisième correspondance et des identificateurs externes de tous les commentaires sur le même contenu dans la deuxième correspondance ; et
une quatrième unité d'envoi (317), configurée de façon à envoyer un commentaire dans la troisième correspondance après cette suppression au serveur de contenu en fonction de l'identificateur interne du contenu, de manière à ce que le serveur de contenu publie ce commentaire sur le contenu.

10. Appareil de synchronisation sociale selon la revendication 6, dans lequel la première unité d'acquisition (32) est configurée spécifiquement de façon à : lorsque la première demande de partage de contenu comprend en outre un compte de l'utilisateur sur le serveur de contenu, acquérir l'identificateur de l'utilisateur sur le site Web de destination en fonction du compte de l'utilisateur sur le site Web de destination, l'identificateur du site Web de destination, et une quatrième correspondance stockée entre le compte de l'utilisateur sur le serveur de contenu et l'identificateur de l'utilisateur sur le site Web de destination ; ou à, lorsque la première demande de partage de contenu comprend en outre un compte de l'utilisateur sur le serveur de contenu, acquérir, à partir d'une quatrième correspondance stockée sur le serveur de contenu, l'identificateur de l'utilisateur sur le site Web de destination en fonction du compte de l'utilisateur sur le serveur de contenu et de l'identificateur du site Web de destination ; ou à, lorsque la première demande de partage de contenu comprend en outre l'identificateur de l'utilisateur sur le site Web de destination, acquérir l'identificateur de l'utilisateur sur le site Web de destination à partir de la première demande de partage de contenu.
